# EUROPÄISCHE PATENTSCHRIFT

(11) **EP 3 271 133 B1**
(45) Veröffentlichungstag und Bekanntmachung des Hinweises auf die Patenterteilung: **14.08.2019**
(21) Anmeldenummer: 16709735.1
(22) Anmeldetag: 02.03.2016
(51) Int. Cl.: B29C 55/02

(54) **BEHANDLUNGSFLUIDFÜHRUNG IN EINER FOLIENRECKANLAGE**
TREATMENT FLUID GUIDANCE IN A FILM STRETCHING PLANT
AMENÉE DE FLUIDE DE TRAITEMENT DANS UNE INSTALLATION D'ÉTIRAGE DE FILM

(30) Priorität: 18.03.2015 DE 102015204871
(43) Veröffentlichungstag der Anmeldung: 24.01.2018
(73) Patentinhaber: Lindauer Dornier Gesellschaft mit beschränkter Haftung, 88131 Lindau (DE)
(72) Erfinder: RESCH, Karsten, 88138 Weißensberg (DE); WOHLGENANNT, Dieter, 6900 Bregenz (AT); KLIER, Wolfgang, 88131 Lindau (DE)
(86) Internationale Anmeldenummer: PCT/EP2016/054355
(87) Internationale Veröffentlichungsnummer: WO 2016/146383

(56) Entgegenhaltungen:
- GB-A- 2 175 246
- JP-A- 2007 261 068
- JP-A- 2009 255 511

## Beschreibung

Die Erfindung betrifft eine Folienreckanlage mit aus mehreren, jeweils eine Belüftungseinheit aufweisenden Behandlungszonen bestehendem Ofen gemäß Oberbegriff von Anspruch 1.

Derartige Folienreckanlagen, welche auch als Folienreckmaschinen bezeichnet werden, dienen dazu, Kunststofffolien in der Regel biaxial zu recken, nachdem ein fließfähiger Kunststoff auf eine Kühlwalze extrudiert, dort gekühlt und soweit verfestigt wird, dass ein in der Anlage zu reckender Film entsteht, welcher durch Behandlungsstationen und eine Vielzahl von einen sogenannten Ofen bildenden Behandlungszonen geführt wird. In den aufeinanderfolgenden Behandlungszonen wird ein Behandlungsfluid auf definierte Temperaturen aufgeheizt und anschließend zur Behandlung der Folie mit dieser an deren Oberseite und Unterseite in Kontakt gebracht. Die einzelnen Behandlungszonen sind dabei so ausgelegt, dass sie je nach Anforderung und zu behandelnder Kunststoffart der Folie unabhängig voneinander mittels entsprechender Wärmetauscher auf die zur Behandlung der Folie in den jeweiligen Behandlungszonen notwendige Temperatur gebracht werden können. Eine derartige Folienreckmaschine ist in DE 36 16 955 C2 beschrieben.

Abgesehen von erforderlichen Längsreckbereichen und Querreckbereichen der Folienreckanlage spielt für die energetische Optimierung derartiger Anlagen wie auch für die Qualität der hergestellten Folie die Luftführung im zentralen Teil der Folienreckanlage, dem Ofen, eine zentrale Rolle.

Um eine möglichst gleichmäßige Behandlungsfluidverteilung wie auch Wärmebehandlung in den jeweiligen Behandlungszonen zu erreichen, sind zahlreiche Düsensysteme für das Behandlungsfluid in den jeweiligen Behandlungszonen entwickelt worden. So ist in EP 2 123 427 A1 vorgeschlagen worden, die Austrittsdüsen für das Behandlungsfluid zig-zag-förmig in mehreren Reihen senkrecht zur Bewegungsrichtung der Folie durch die Anlage anzuordnen, um eine möglichst gleichmäßige Wärmeübertragungsrate in Breitenrichtung der Folie erzielen zu können. In JP 2009 25 55 11 A ist eine Luftdüsenanordnung beschrieben, bei welcher auf der der zu behandelnden Folie zugewandten Seite die Luftdüsen spaltenartig angeordnet sind, deren Abstand auf der Folieneinlaufrichtung kleiner ist als im mittleren Bereich zwischen den Spalten im Folieneinlaufbereich und denen im Folienaustrittsbereich. In JP 2007 26 10 68 A ist ein Luftgebläse zur Beaufschlagung von zu behandelnder Folie unter Verwendung von Strömungsumlenkblechen zur gleichmäßigen Beaufschlagung beschrieben. Eine Gesamtoptimierung der Behandlungsfluidführung durch die gesamte Anlage ist bei diesem Stand der Technik jedoch nicht angesprochen.

Die Qualität der hergestellten Folie hängt entscheidend auch von der Luftführung ab. Wenn beispielsweise die Luft durch die verschiedenen Behandlungszonen mit der Folie unter Ausbildung von Laminarströmungen längs des Ofeninnern durch den Ofen strömt, so hat das eine relativ geringe Gleichmäßigkeit der Temperatur zur Folge. Soll dieses Problem vermieden werden, so ist bei bekannten Anlagen vorgeschlagen worden, immer die Menge an Behandlungsfluid zuzugeben, welche entnommen wird. Dies jedoch führt dazu, dass große Mengen an Behandlungsfluid bewegt und aufgeheizt werden müssen, was aus Gründen der Energieeffizienz nachteilig ist.

Ein weiteres Problem, das im Zusammenhang mit der Erzielung einer hochqualitativen Folie von Bedeutung ist, ist die Beseitigung oder starke Reduzierung der verdampften Folieninhaltsstoffe, welche nachfolgend Verunreinigungen genannt werden. Dies sind beispielsweise je nach Folienmaterial Oligomere, Wachse und Öle bzw. Caprolactam oder andere. Dabei handelt es sich um Folienbestandteile, welche bei der Reckung und bei der Erwärmung frei werden, ohne dass dabei Abrieb eine Rolle spielt. Die Verunreinigungen entstehen dadurch, dass Polymere in der Regel nicht rein sind, sondern auch kurzkettige Bestandteile enthalten, welche beim Erwärmen verdampfen und sich gegebenenfalls beim Abkühlen der Folie, bevor diese den Ofen verlässt, wieder resublimieren oder kondensieren und sich auf der Folie niederschlagen, was zu einer Qualitätsverschlechterung beiträgt. Die Menge, Art und Intensität von sich auf der Oberfläche von Folien ablagernden Verunreinigungen hängt auch vom Kunststoff ab, aus welchem die Folie besteht.

Jedenfalls spielt die Art der Führung des Behandlungsfluids und die Temperatur in den jeweiligen Behandlungszonen im Zusammenhang mit dem eingesetzten Kunststoff für die herzustellende Folie eine entscheidende Rolle, wenn es darum geht, die Verunreinigungen aus dem Behandlungsfluid zu entfernen, bevor diese Gelegenheit bekommen, sich auf der Oberfläche der Folie niederzuschlagen, um dadurch die Folienqualität zu verschlechtern.

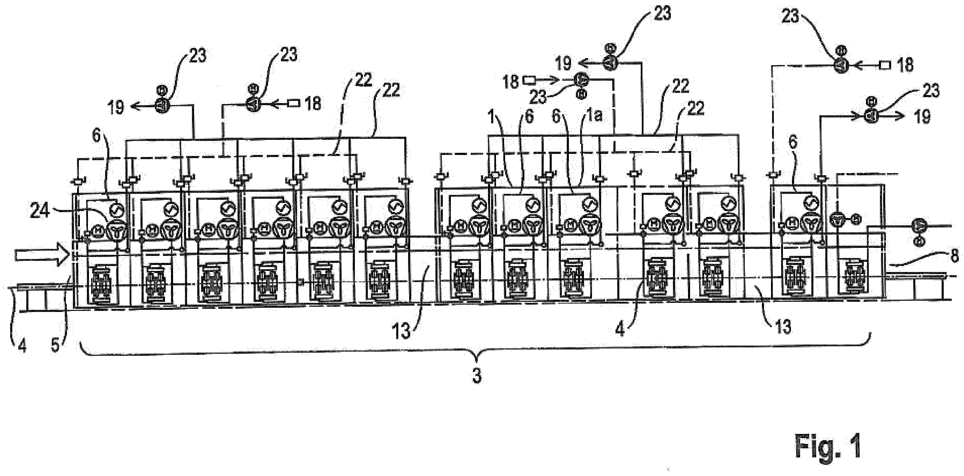

Darüber hinaus hat die Art der Führung des Behandlungsfluids einen erheblichen Einfluss auf die Menge an verbauten Rohrleitungen und damit auch auf die Kosten einer derartigen Anlage. Eine bekannte, vom Anmelder gebaute und vertriebene Folienreckanlage (s. Fig. 1) erreicht zwar schon eine relativ hohe Gleichmäßigkeit der Temperatur in den jeweiligen Behandlungszonen. Dies muss aber mit einem relativ hohen Energieverbrauch und einem großen Aufwand an verbauten Rohren erkauft werden.

Eine Möglichkeit, diesen großen Rohrleitungsaufwand zu reduzieren, besteht in einer Durchleitung des Behandlungsfluids durch die Behandlungszonen längs der Folie. Dies wiederum reduziert zwar den Energieverbrauch, verstärkt aber die für eine hohe Gleichmäßigkeit der Temperatur schädliche Längsströmung durch die Anlage.

Die der Erfindung zugrunde liegende Aufgabe besteht daher darin, eine Folienreckanlage unter Vermeidung der Nachteile von derartigen Anlagen im Stand der Technik zu schaffen, welche für die Folie den Bedarf an frisch zuzuführendem Behandlungsfluid und Energiezufuhr dafür minimiert, nachteiligen Einfluss von Verunreinigungen auf die Qualität der Folie reduziert bzw. vermeidet, zur Sicherstellung einer hohen Qualität der Folie unbeabsichtigte Temperaturschwankungen des Behandlungsfluids in den jeweiligen Behandlungszonen gering hält und bei welcher die Menge extern verbauter Rohre für das Behandlungsfluid reduziert ist.

Diese Aufgabe wird mit einer Folienreckanlage mit den Merkmalen gemäß Anspruch 1 gelöst. Zweckmäßige Weiterbildungen sind in den abhängigen Ansprüchen definiert.

Gemäß der Erfindung weist die Folienreckanlage einen aus mehreren Behandlungszonen bestehenden Ofen auf, mit welchen jeweils eine Belüftungseinheit verbunden ist. Diese Belüftungseinheit kann neben den Behandlungszonen angeordnet sein, ist jedoch vorzugsweise auf der jeweiligen Behandlungszone angeordnet und wird auch als sogenanntes Penthouse bezeichnet. Über einen Folieneintrittsbereich ist die Folie dem Ofen zuführbar. Die einzelnen Behandlungszonen sind bezüglich der Behandlung der Folie autark, so dass die Folie zonenweise thermisch behandelbar ist, und zwar derart, dass der Folienreckanlage zugeführtes Behandlungsfluid die Folie in den Behandlungszonen oberseitig wie auch unterseitig überströmt. Dieses Umströmen der Folie im Durchtrittsbereich der Folie durch die Behandlungszone wird nun so realisiert, dass eine laminare Strömung in Richtung des Durchtritts der Folie durch die jeweilige Behandlungszone minimiert wird.

Gemäß der Erfindung ist das Behandlungsfluid in der jeweiligen Behandlungszone durch ihre jeweilige, zugeordnete Belüftungseinheit zur thermischen Behandlung der Folie umwälzbar, wobei ein Teil des Behandlungsfluids von der jeweiligen Behandlungszone zur prozesstechnisch nachfolgenden Behandlungszone geführt ist. Prinzipiell werden aber 100% des Behandlungsfluids in der jeweiligen Behandlungszone umgewälzt. Damit ist jede Behandlungszone individuell auf die geforderte thermische Behandlungsaufgabe der Folie in dieser Behandlungszone einstellbar bzw. regelbar. Der von der Behandlungszone in die nachfolgende Behandlungszone geführte Teil des Behandlungsfluids ist entkoppelt vom Durchtrittsbereich der Folie durch die Behandlungszonen geführt. Das bedeutet, dass in dem Bereich, in welchem die Folie durch die jeweilige Behandlungszone hindurchtritt, das Behandlungsfluid nicht aus der jeweiligen Behandlungszone in die prozesstechnisch nachfolgende Zone gelangt. Vielmehr erfolgt das Weiterführen des festgelegten Teils des Behandlungsfluids an anderer Stelle in der Behandlungszone, jedenfalls zumindest weitestgehend nicht im Durchtrittsbereich der Folie.

Erfindungsgemäß ist des Weiteren die jeweilige Behandlungszone mit einem Wärmetauscher, ausgerüstet, welcher vorzugsweise in die Belüftungseinheit integriert ist und mittels welchem der hier umgewälzte und zugeführte Teil des Behandlungsfluids an die in dieser Behandlungszone prozesstechnisch zur thermischen Behandlung der Folie erforderliche Temperatur anpassbar ist. Wenn also die in einer Behandlungszone vorhandene Menge an Behandlungsfluid zur thermischen Behandlung der Folie umgewälzt wird, so erfolgt das auf dem in der Behandlungszone für die thermische Behandlung der Folie erforderlichen Temperaturniveau. Wenn nun ein Teil des Behandlungsfluids aus einer Behandlungszone in die prozesstechnisch nachfolgende Behandlungszone übergeführt wird, so hat dieser Teil zunächst in der Regel eine Temperatur, welche sich von der in der nachfolgenden Zone für die thermische Behandlung der Folie erforderlichen Temperatur unterscheiden kann.

Innerhalb einer Behandlungszone erfährt das gesamte darin zirkulierende Behandlungsfluid über einen Wärmetauscher eine Wärmezufuhr. Dem zugeführten Teilstrom an Behandlungsfluid aus der benachbarten Behandlungszone wird dabei so viel Wärme zugeführt, dass der Temperaturunterschied ausgeglichen wird. Dem gesamten in der Behandlungszone zirkulierenden Behandlungsfluid wird so viel Wärme zugeführt, dass der Wärmeverlust infolge von Abstrahlung und Konvektion von Komponenten der Behandlungszone sowie in Folge der Erwärmung der Folie ausgeglichen wird. Da benachbarte Behandlungszonen in vielen Fällen einen prozesstechnisch relativ geringen Temperaturunterschied aufweisen, ist aus diesem Grunde die Menge an dem Teilstrom zuzuführender Wärmeenergie meist geringer, als wenn der Teilstrom von außen zugeführt werden muss. Insgesamt wird daher bereits aus diesem Grunde eine Energieeinsparung bei Einhaltung von thermischen Behandlungsbedingungen für die Folie gewährleistet, welche zudem eine hohe Qualität der Folie sichern.

Gemäß einer Weiterbildung der Erfindung ist dem Ofen Behandlungsfluid im Folieneintrittsbereich und in einem Folienaustrittsbereich derart zuführbar, dass es hinsichtlich seiner Strömungsrichtung durch den Ofen und der Folienbewegungsrichtung vom Folieneintrittsbereich aus durch den Ofen im Gleichstrom und vom Folienaustrittsbereich aus im Gegenstrom strömt. Dies ist prozesstechnisch vor allem deshalb von Vorteil, weil vom Folieneintrittsbereich aus bis zu einem Bereich von Behandlungszonen mit den für die thermische Behandlung höchsten Temperaturen die Behandlungstemperatur schrittweise oder kontinuierlich ansteigt, wohingegen die Temperatur des Behandlungsfluids von dort zum Folienaustrittsbereich des Ofens hin abnimmt.

Durch die Führung des Teilstroms an Behandlungsfluid (6a) von Behandlungszonen mit prozesstechnisch niedrigeren Temperaturen zu Behandlungszonen mit prozesstechnisch höheren Temperaturen wird die Kondensation bzw. Resublimation von Verunreinigungen vermieden. Aus diesem Grund ist die oben beschriebene Ausbildung eines Gleichstrom- und eines Gegenstrombereichs in vielen Fällen sinnvoll.

Vorzugsweise ist das Behandlungsfluid Luft. Vorzugsweise sind der zur jeweiligen Behandlungszone geführte Teil des Behandlungsfluids sowie der zur jeweiligen Belüftungseinheit zugeordnete Wärmetauscher unabhängig voneinander oder in Abstimmung zueinander so regelbar, dass in der jeweiligen Behandlungszone ein definiertes Temperaturprofil bzw. Temperaturniveau an der thermisch behandelten Folie einstellbar ist. Dabei kann das definierte Temperaturprofil ein Temperaturprofil sein, welches innerhalb der Behandlungszone eine Veränderlichkeit der Temperatur mit der Zeit reflektiert wie auch ein Temperaturprofil, das sich örtlich über die einzelnen Belüftungseinheiten ausbildet, so dass letztendlich ein definiertes Temperaturprofil im gesamten Ofen vorhanden ist, welchem die in dem Ofen behandelte Folie ausgesetzt ist. Ein wesentlicher Vorteil der Regelbarkeit der Menge an Behandlungsfluid, welche von einer Behandlungszone zu der prozesstechnisch nachfolgenden Behandlungszone geführt wird, und der Regelung des Wärmetauschers besteht einerseits in einer energieeffizienten und doch hinsichtlich der thermischen Behandlung der Folie optimalen Wärmebehandlung der Folie.

Vorzugsweise ist prozesstechnisch nach dem Folieneintrittsbereich eine Entnahmestelle zur Entnahme von Behandlungsfluid vorgesehen. Durch das Vorsehen einer Entnahmestelle von Behandlungsfluid, über welche vorzugsweise die Menge an Behandlungsfluid, welche über diese Entnahmestelle entnehmbar ist, regelbar ist, wird die Flexibilität der Folienreckanlage hinsichtlich der Behandlungsfluidführung durch die Anlage weiter erhöht. Auch kann über die Regelung der Menge der Entnahme von Behandlungsfluid das Abführen von gegebenenfalls auftretenden Verunreinigungen im Sinne einer Reduzierung im Ofen längs des weiteren Durchtritts der Folie durch den Ofen erreicht werden.

Vorzugsweise erfolgt die Entnahme von Behandlungsfluid über die Entnahmestelle an zumindest einer Behandlungszone oder erfolgt die Entnahme über je eine Entnahmestelle an zwei benachbart zueinander angeordneten Behandlungszonen, in welchen Behandlungstemperaturen vorliegen, welche höher sind als die in den restlichen Behandlungszonen. Das bedeutet, eine Entnahme von Behandlungsfluid wird vorzugsweise aus den Behandlungszonen mit den prozesstechnisch höchsten Temperaturen vorgenommen. In diesen Behandlungszonen ist die Menge an ab- bzw. ausgedampften Verunreinigungen am höchsten. Wenn aus diesen Bereichen des Ofens Behandlungsfluid abgeführt wird, kann deren Reduzierung in Richtung des Durchtritts der Folie durch den Ofen in absoluten Mengen am stärksten beeinflusst werden. Eine entsprechende Abreinigung der Verunreinigungen aus dem entnommenen Behandlungsfluid kann über zusätzliche Anlagen erfolgen, so dass energieökonomisch ein um eine gewisse Menge oder im Wesentlichen vollständig von Verunreinigungen entreichertes Behandlungsfluid dem Prozess wieder zugeführt werden kann.

Vorzugsweise weist die Folienreckanlage zusätzlich einen Katalysator auf, durch welchen das entnommene Behandlungsfluid geführt werden kann, welcher extern von den Behandlungszonen angeordnet ist und das entnommene Behandlungsfluid katalytisch behandelt. Prinzipiell ist es möglich, mehrere Katalysatoren vorzusehen, so dass zumindest einigen Behandlungszonen im Bereich der höchsten Prozesstemperaturen ein solcher Katalysator zugeordnet sein kann. Es ist jedoch auch möglich, und dies ist die bevorzugte Variante, dass ein zentraler Katalysator vorhanden ist, welcher mit Behandlungsfluid aus der Behandlungszone mit der prozesstechnisch höchsten Temperatur beaufschlagt ist.

Vorzugsweise ist dem Katalysator in Durchströmrichtung nachgeordnet ein Filter zum Filtern des katalytisch behandelten Behandlungsfluids zugeordnet. Zum einen wird in dem Katalysator ein großer Teil der Verunreinigungen katalytisch verbrannt, so dass durch das Vorsehen eines Filters die dabei entstehenden Rückstände abgefiltert werden können und ein relativ reines Behandlungsfluid dem Ofen oder der jeweiligen Behandlungszone wieder zugeführt werden kann. Dadurch entsteht neben der Abreinigung von Verunreinigungen zum anderen eine energieeffiziente Wiederverwendung des Behandlungsfluids bezogen auf den gesamten Behandlungsprozess im Ofen.

Vorzugsweise ist zusätzlich in Durchströmrichtung nach dem Katalysator bzw. nach dem Filter eine Wärmerückgewinnungseinrichtung angeordnet, deren rückgewonnene Wärmeenergie dem Ofen wieder zuführbar ist und/oder von welcher das Behandlungsfluid ausgewählten Behandlungszonen je nach in der jeweiligen Behandlungszone zu realisierendem Temperaturprofil oder Temperaturniveau wieder zuführbar ist. Dadurch wird insgesamt eine Optimierung des Behandlungsfluids hinsichtlich des energetischen Aufwandes erreicht, dieses Behandlungsfluid auf das im Ofen bzw. in den jeweiligen Behandlungszonen zu erzielende Temperaturprofil einzustellen. Vorzugsweise ist die Wärmerückgewinnungseinrichtung ein Wärmetauscher. Die für den Prozess bzw. die Anlage gewünschte Regelbarkeit der Wärmezufuhr erfolgt im Wärmetauscher der Behandlungszone. Die rückgewonnene Energie wird vorzugsweise der jeweiligen Behandlungszone zugeführt. Weiter vorzugsweise ist die Entnahme von Behandlungsfluid aus den Behandlungszonen realisiert, welche am Ende des Gleichstrombereichs und am Ende des Gegenstrombereichs angeordnet sind. Damit erfolgt die Entnahme in dem Bereich, in welchem Gleichstrombereich und Gegenstrombereich aneinandergrenzen. Damit lässt sich eine relativ genaue Einstellung der Behandlungsfluidführung in den jeweiligen Bereichen und Behandlungszonen weiter verbessern.

Zusätzlich ist weiter vorzugsweise eine Überbrückungseinrichtung zur Überleitung von Behandlungsfluid über eine behandlungsfreie Neutralzone zur prozesstechnisch nachfolgenden Behandlungszone angeordnet. Diese Überbrückungseinrichtung kann Wärmeenergie aus der Wärmerückgewinnungseinrichtung zugeführt bekommen, und zwar in einem solchen Umfang, dass das zurückgeführte Behandlungsfluid direkt der behandlungstechnischen Beeinflussung gemäß den dort zu erzielenden Behandlungsparametern gerecht wird. Das bedeutet, dass das Behandlungsfluid bereits vor Eintritt in die nachfolgende Behandlungszone zielgerichtet an die in dieser Behandlungszone zu realisierenden prozesstechnischen Bedingungen bezüglich seiner dafür erforderlichen Parametern angepasst bzw. auf diese "eingestellt" wird. Vorzugsweise sind die Überbrückungseinrichtungen bezüglich des Volumenstroms des Behandlungsfluids regelbar. Damit ist es möglich, die Menge an eine Neutralzone überbrückenden Behandlungsfluids zur nach der Neutralzone prozesstechnisch gelegenen nächsten Zone zu regeln, so dass eine hohe Flexibilität bei der Behandlungsfluidführung und der Erreichung eines definierten für die Behandlung optimalen Temperaturprofils bzw. Temperaturniveaus erreicht werden kann.

Gemäß einem weiteren Ausführungsbeispiel besteht der Ofen aus zahlreichen Behandlungszonen in Form von Eintrittszone, Reckzonen, Fixierzonen und Austrittszonen, wobei zusätzlich Aufheizzonen, Kühlzonen und Neutralzonen vorgesehen sein können. Die Anzahl und die Art der verschiedenen Arten von Behandlungszonen richtet sich einerseits nach dem Kunststoff, aus welchem die Folie hergestellt wird, wie auch nach den Eigeschafften, welche die herzustellende Folie haben soll.

Damit der aus einer Behandlungszone in die prozesstechnisch nachfolgende Behandlungszone geführte Teil des Behandlungsfluids entkoppelt vom Durchtrittsbereich der Folie in den Behandlungszonen erfolgt, wird das Behandlungsfluid über einen Verbindungskanal von Behandlungszone zu Behandlungszone geführt. Dieser Verbindungskanal ist strömungstechnisch also vom Durchtrittsbereich der Folie durch die Behandlungszonen getrennt, so dass durch diese Anordnung des Verbindungskanals wesentlich erreicht wird, dass eine laminare Strömung in Richtung des Durchtritts der Folie durch die Behandlungszone minimiert werden kann.

Vorzugsweise ist der Verbindungskanal zwischen zwei Belüftungseinheiten oder zwei Behandlungszonen oder einer Belüftungseinheit und einer Behandlungszone angeordnet. Weiter vorzugsweise ist der Verbindungskanal zwischen der Behandlungszone und der vorzugsweise auf dieser angeordneten Belüftungseinheit vorgesehen.

In dem Verbindungskanal können Vorrichtungen vorgesehen sein, mittels welcher die Strömung des Behandlungsfluids durch den Verbindungskanal vorzugsweise regelbar und/oder steuerbar ist. Damit wird die Menge an Behandlungsfluid beeinflusst, welche von einer Behandlungszone zur prozesstechnisch nachfolgenden Behandlungszone geführt ist.

Weitere Details und Ausgestaltungen der Erfindung werden nun anhand der beigefügten Zeichnungen detailliert unter Beschreibung eines bevorzugten Ausführungsbeispiels beschrieben. In der Zeichnung zeigen:
- Figur 1: ein Ofen als zentralem Teil einer Folienreckanlage einer Ausführungsform gemäß dem Stand der Technik;
- Figur 2: eine räumliche Ansicht einer Anlage gemäß Fig. 1 mit Darstellung der verlegten Rohrleitungen;
- Figur 3: eine prinzipielle Darstellung der Führung von Behandlungsfluid im Ofen einer erfindungsgemäßen Folienreckanlage;
- Figur 4: eine Behandlungszone mit darauf angeordneter Belüftungseinheit als Teilelement einer erfindungsgemäßen Folienreckanlage;
- Figur 5: einen Verbindungskanal zwischen benachbarten Behandlungszonen zur Weiterleitung von Behandlungsfluid von einer Behandlungszone zur prozesstechnisch benachbarten Behandlungszone;
- Figur 6: eine prinzipielle Ansicht der Führung von Behandlungsfluid innerhalb einer Belüftungseinheit einer Behandlungszone mit angedeutetem zusätzlichen Verbindungskanal zur Überleitung eines Teils des Behandlungsfluids in eine Belüftungseinheit einer prozesstechnisch nachfolgenden Behandlungszone; und
- Figur 7: eine prinzipielle Darstellung eines Teils eines Ofens einer erfindungsgemäßen Folienreckanlage mit zusätzlich vorgesehenem Katalysator, einer Filtereinheit und einer Wäremerückgewinnungseinrichtung.

In Fig. 1 ist ein Ofen als zentralem Teil einer bekannten Folienreckanlage dargestellt. Der dem Ofen der Folienreckanlage unmittelbar vorgeschaltete Teil ist hier nicht dargestellt, da es sich bei der vorliegenden Erfindung im Wesentlichen um die Führung von Behandlungsfluid durch den aus zahlreichen Behandlungszonen bestehenden Ofen handelt.

Bevor die Folie über den Folieneintrittsbereich 5 in den Ofen 3 eintritt, muss die als Ausgangsmaterial in der Regel in Form eines Granulats vorliegende Kunststoffmasse aufbereitet werden. Dazu wird in der Regel ein Kunststoffgranulat aus einem Vorratsbehälter einem Behälter in der Art eines Silos zugeführt, von welchem das Granulat einem Extruder zugeführt wird. In dem ebenfalls nicht dargestellten Extruder wird der Kunststoff aufgeschmolzen und mit einer entsprechend angeordneten Düse auf eine ebenfalls nicht gezeigte Kühlwalze aufgebracht, so dass die Schmelze soweit erstarrt, dass eine Folie einer definierten Breite und Dicke entsteht. In einem sich anschließenden Längsreckbereich der gesamten Folienreckanlage ist ein Walzensystem vorgesehen, deren prozesstechnisch nachgeschaltete Walzen mit einer definierten höheren Drehzahl als die prozesstechnisch davor liegenden Walzen betrieben werden, so dass durch die Drehzahlunterschiede die Folie in Längsrichtung gereckt wird.

Nachdem die Folie 4 über den Folieneintrittsbereich in den Ofen 3 mit seinen zahlreichen Behandlungszonen eingetreten ist, wird die Folie 4 während ihrer Behandlung in verschiedenen Behandlungszonen thermisch behandelt und gleichzeitig in der Breite gereckt. Dadurch weist die Folie 4 am Folienaustrittsbereich 8 des Ofens 3 eine deutlich größere Breite auf als am Folieneintrittsbereich 5. Am Folienaustrittsbereich 8 ist die Folie 4 thermisch behandelt und in ihren Endzustand gereckt. Nach einer ebenfalls nicht dargestellten Randbeschneidung wird die Folie über ein nicht dargestelltes Walzensystem auf eine Walze im Sinne eines Warenbaumes aufgewickelt. Dieses nicht dargestellte Walzensystem wird auch als Folienabzugs-/Folienaufwickelbereich bezeichnet.

Der in Fig. 1 dargestellte Ofen als zentralem Teil der bekannten Folienreckanlage ist in zahlreiche Behandlungszonen unterteilt, von den beispielhaft lediglich zwei benachbarte Behandlungszonen 1 und 1a bezeichnet sind. Dargestellt ist links der Folieneintrittsbereich 5 und rechts der Folieneintrittsbereich 8. Die Folie 4 ist schematisch am Folieneintrittsbereich 5 wie auch am Folienaustrittsbereich 8 durch eine lang-kurz-kurz-gestrichelte Linie angedeutet. Dargestellt ist vor allen Dingen die Behandlungsfluidführung über zahlreiche Rohrleitungen zwischen den einzelnen Behandlungszonen. Zwischen einigen Behandlungszonen sind Neutralzonen 13 angeordnet. Zahlreichen Behandlungszonen wird mit außerhalb des Ofens angeordneten Lüftern 23 über außerhalb des Ofens 3 in dessen Langsrichtung angeordnete Rohrleitungen 22 Behandlungsfluid zugeführt und auch wieder entnommen.

Diese bekannte Ausführungsform vermeidet bereits in erheblichem Maße die für ein gleichmäßiges Temperaturprofil bzw. für eine gleichmäßige Temperatur für die Behandlung der Folie in den einzelnen Zonen schädliche Längsluft bzw. Längsströmung. Für diese bekannte Anlage ist jedoch ein relativ hoher Energieverbrauch erforderlich, wobei die relativ geringe Längsströmung an Behandlungsfluid durch ein umfangreiches Rohrleitungssystem erkauft werden muss.

Bei dieser bekannten Anlage wird die Folie in den jeweiligen Behandlungszonen in Durchtrittsrichtung der Folie durch den Ofen behandelt. Jedenfalls ist es für die Gewährleistung eines gleichmäßigen Temperaturprofils bzw. einer hohen Temperaturgleichmäßigkeit bzw. einer geringen Temperaturdifferenz in den einzelnen Behandlungszonen wichtig, dass die Längsströmung von Behandlungsfluid durch den Ofen kontrolliert wird. Bei dieser bekannten Anlage ist dies durch das umfangreich ausgebildete Rohrsystem bereits relativ gut möglich, der bauliche Aufwand und damit die Kosten für eine derartige Anlage sowie auch der Energieverbrauch für eine solche Anlage sind jedoch hoch.

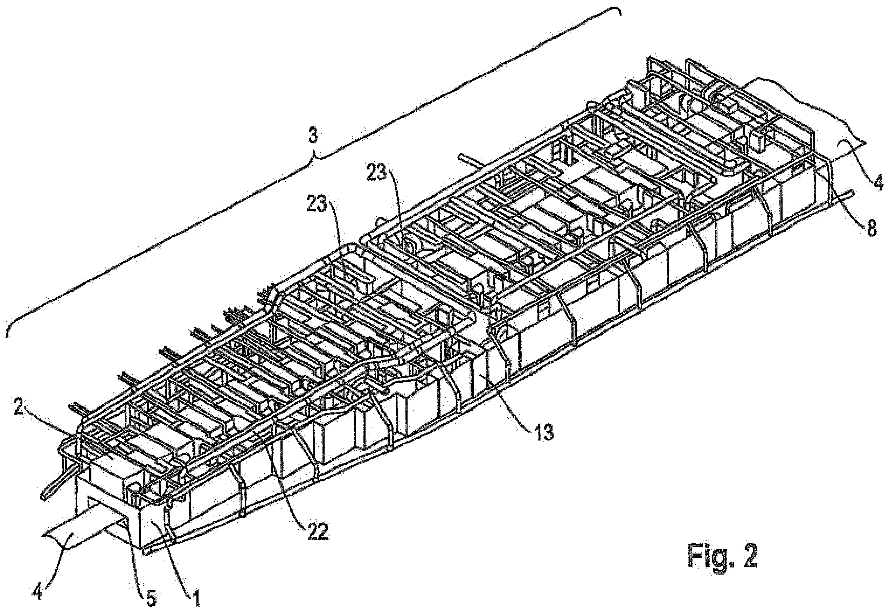

Zur Verdeutlichung des großen Aufwandes an Rohrleitungen für diese bekannte Anlage ist in Fig. 2 eine räumliche Ansicht von oben auf die bekannte Anlage gemäß Fig. 1 dargestellt. Besonders deutlich und erkennbar bei dieser bekannten Folienreckanlage ist das im Ofen 3 als zentralem Teil vorhandene umfangreiche Rohrleitungssystem, was für die Führung des in der Regel in Form von Luft verwendeten, in den Behandlungszonen ausgetauschten Behandlungsfluids vorgesehen ist. Die einzelnen Behandlungszonen sind im Wesentlichen über das dargestellte Rohrleitungssystem untereinander verbunden. Das in Fig. 2 gezeigte und in prinzipieller Anordnung in Fig. 1 bereits angedeutete Rohrleitungssystem dient dazu, den jeweiligen Behandlungszonen Frischluft von außen zuzuführen, welche zur Realisierung der jeweiligen prozesstechnisch bedingten Behandlungsaufgabe in der jeweiligen Behandlungszone erwärmt werden muss. Dies führt jedoch zu einem hohen Energieverbrauch der Gesamtanlage.

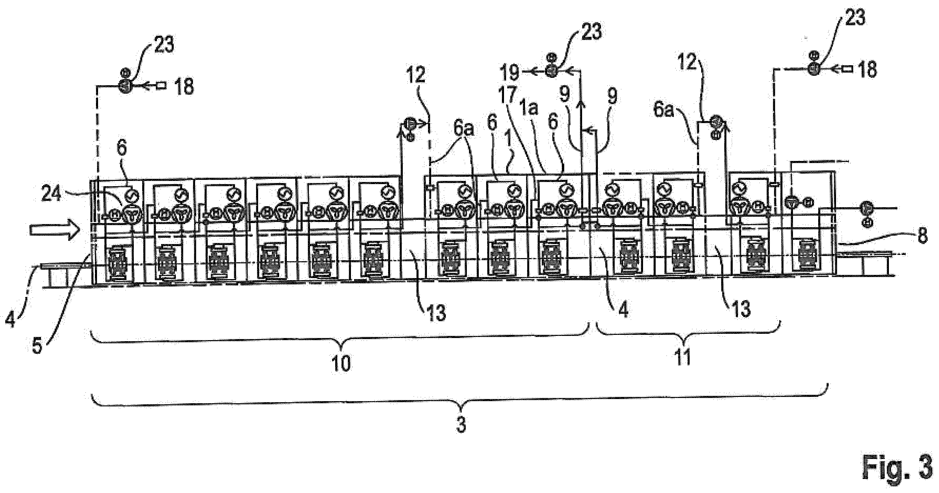

Bei dem erfindungsgemäßen Ausführungsbeispiel gemäß Fig. 3 erfolgt der Austausch an Behandlungsfluid mit deutlich weniger Energieverbrauch als bei den bekannten Anlagen und mit gleichzeitig sehr geringer Längsströmung an Behandlungsfluid im Foliendurchtrittsbereich. Dadurch wird ein sehr gutes, an die optimalen Prozessbehandlungsparameter angepasstes Temperaturprofil in den Behandlungszonen gewährleistet. Der geringere Energieverbrauch rührt hauptsächlich daher, dass die dem gesamten Ofen 3 frisch zugeführte Menge an Behandlungsfluid 6 im Vergleich zum Stand der Technik nach Figur 1 deutlich reduziert ist. Erfindungsgemäß wird dies ohne eine Erhöhung der Menge des längs der Folie strömenden Behandlungsfluids erreicht. Ein frisch dem Ofen zugeführtes Behandlungsfluid 6 wird an einer bzgl. des Temperaturprofils günstigen Stelle dem Ofen zugeführt und dann als Teilstrom 6a einer prozesstechnisch nachfolgenden Behandlungszone gezielt, definiert und vom Foliendurchtrittsbereich getrennt weitergegeben. Vorzugsweise wird der Teilstrom 6a von einer Behandlungszone 1 an eine benachbarte Behandlungszone 1a mit höherer Prozesstemperatur weitergegeben. So kann der Teilstrom 6a immer zusätzliche Verunreinigungen aufnehmen, ohne einer Gefahr der Resublimation und Kondensation. Es wird also erreicht, dass das dem gesamten Ofen frisch zugeführte Behandlungsfluid optimal genutzt wird.

In der Fig. 3 ist nun in prinzipieller, schematischer Darstellung ein Ofen als zentralem Teil der erfindungsgemäßen Folienreckanlage mit der neuartigen Führung von Behandlungsfluid dargestellt. Auch bei diesem erfindungsgemäßen Ausführungsbeispiel besteht der Ofen 3 aus zahlreichen Behandlungszonen, von denen wiederum zwei aufeinanderfolgende Behandlungszonen 1 und 1a bezeichnet sind. Im Ofen 3 selbst sind zwei Neutralzonen 13 angeordnet. Behandlungsfluid 6 wird der ersten Behandlungszone des Ofens 3 zugeführt, in welcher sich der Folieneintrittsbereich 5 zum Zuführen der Folie 4 befindet. Schematisch dargestellt und zu jeder Behandlungszone zugehörig sind die entsprechenden Belüftungseinheiten 2. Unter Behandlungszone wird dabei die eigentliche Behandlungszone zusammen mit der Belüftungseinheit verstanden. Die Belüftungseinheit ist in Form eines sogenannten Penthauses auf der eigentliche Behandlungszone angeordnet.

Diese Belüftungseinheiten sorgen dafür, dass prinzipiell 100% des Behandlungsfluids in einer Behandlungszone umgewälzt wird, sodass die zu behandelnde Folie an ihrer Oberseite und an ihrer Unterseite umströmt wird, ohne dass die zu vermeidende Laminarströmung bzw. Längsströmung in der Behandlungszone in Transportrichtung der Folie auftritt. Jede Behandlungszone ist daher mehr oder weniger autark, was die Verwirklichung ihrer Aufgabe der thermischen Behandlung der Folie in dieser Behandlungszone gerecht wird.

Es ist nun vorgesehen, dass lediglich ein Teil 6a des Behandlungsfluids 6 von einer Behandlungszone 1 mit einer definierten Behandlungstemperatur in die prozesstechnisch nachfolgende Behandlungszone 1a höherer Behandlungstemperatur geführt ist. Dieser Teil 6a des Behandlungsfluids ist bezüglich seiner Menge steuerbar und/oder regelbar, sodass zum einen der Gesamtdurchsatz von Behandlungsfluid durch den Ofen in Längsrichtung verringert werden kann und zudem die Weiterleitung des Teils 6a des Behandlungsfluids 6 im Inneren des Ofens, das heißt im Inneren der aus Behandlungszone und Belüftereinheit bestehenden modulartigen Behandlungsbereiche, stattfindet. Dadurch werden insgesamt erhebliche Mengen an externen Rohrleitungen und damit Investitionskosten eingespart, welche zudem am Äußeren des Ofenbereiches nicht mehr vorzusehen sind. Dies führt auch zu reduziertem Wärmeeintrag in das Gebäude, in welchem die Anlage steht, und zu einer Reduzierung des Bedarfs an elektrischer Energie, weil Lüfterenergie ebenfalls eingespart wird. Darüber hinaus ist mit der erfindungsgemäßen Lösung eine deutlich verbesserte, exaktere Temperaturführung realisierbar und ermöglicht im Vergleich mit den bekannten Lösungen eine betriebssichere und gezielte Rückführung rückgewonnener Energie in das System.

Behandlungszonen, zwischen denen eine Neutralzone 13 angeordnet ist, sind durch externe Überbrückungen 12 überbrückt, sodass Behandlungsfluid auch über Neutralzonen 13 hinweg weitergeleitet werden kann. Als eine prozesstechnisch nachfolgende Behandlungszone 1a wird auch eine Behandlungszone angesehen, welche prozesstechnisch einer Neutralzone 13 folgt. Durch die spezielle Art der Weiterleitung von Behandlungsfluid zwischen den Behandlungszonen entsteht jedenfalls wegen der Zufuhr von Behandlungsfluid beispielsweise in der ersten Behandlungszone, welche den Folieneintrittsbereich 5 aufweist, bezogen auf die Förderrichtung der Folie durch den Ofen 3, ein Gleichstrombereich 10 in diesem Bereich des Ofens.

Bei dem vorliegenden Ausführungsbeispiel wird Behandlungsfluid auch in einer im Endbereich des Ofens 3 befindlichen Behandlungszone eingespeist, sodass sich von dort bis an das Ende des Gleichstrombereichs ein Gegenstrombereich 11 ausbildet. Im Bereich des Zusammentreffens von Gleichstrombereich 10 und Gegenstrombereich 11 ist eine aus beiden dort benachbart zueinander angeordneten Behandlungszonen vereinigte Entnahmestelle 9 zum Abführen von Behandlungsfluid 6 vorgesehen.

Prinzipiell ist es natürlich auch möglich, dass je nach Anforderungsprofil ein Ofen einer erfindungsgemäßen Folienreckanlage nur einen Gleichstrombereich aufweist. Zufuhr 18 von Behandlungsfluid ist durch eine gestrichelte und dessen Entnahme 19 durch eine durchgezogene Linie dargestellt.

Die Folienreckanlage mit der neuartigen Behandlungsfluidführung dient einerseits dazu, den Energieaufwand bei der Führung großer Mengen an frischem Behandlungsfluid sowie bei der Aufheizung der in den Behandlungszonen zur thermischen Behandlung der Folie vorzugsweise verwendeten Luft als Behandlungsfluid zu reduzieren und andererseits stets einen solchen Anteil an Luft abzuzweigen, dass eine optimale Verunreinigungs-Entfernung in der Anlage möglich ist. Der nachteilige Einfluss von aus der Folie ausgedampften Verunreinigungen spielt in den Behandlungszonen eine allenfalls untergeordnete Rolle, in welchen das Temperaturprofil zur Behandlung der Folie von Behandlungszone zu Behandlungszone angehoben wird. Dies ist im Wesentlichen in dem Bereich des Gleichstroms 10 der Fall. Im hinteren Teil des Ofens, in welchem bei dem vorliegenden Ausführungsbeispiel gemäß Figur 3 ein Gegenstrombereich 11 der Führung des Behandlungsfluids vorgesehen ist, wird die Temperatur der behandelten Folie in Richtung auf den Folienaustrittsbereich 8 abgesenkt, damit diese nach ihrem Austritt aus dem Folienaustrittsbereich 8 so weit abgekühlt ist, dass sie problemlos aufgewickelt werden kann. Bei diesem Abkühlungsvorgang der Folie besteht jedoch die Möglichkeit, dass die Verunreinigungen sich auf der Oberfläche der Folie niederschlagen, was eine Qualitätsverschlechterung der Folie bedeuten würde. Daher ist es erforderlich, das Behandlungsfluid vorzugsweise in dem Bereich des Ofens abzuziehen, in dem die prozesstechnisch höchsten Temperaturen in den jeweiligen Behandlungszonen vorliegen.

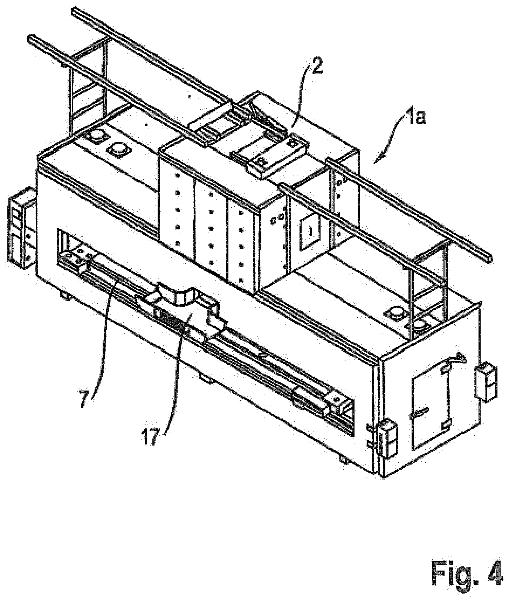

In Figur 4 ist eine einzelne Behandlungszone mit darauf angeordneter Belüftungseinheit 2 dargestellt. Der an der vorderen Stirnseite dieser Behandlungszone 1 dargestellte schlitzartige Einlassbereich ist der Durchtrittsbereich 7 der Folie. Erkennbar ist gemäß einem ersten Ausführungsbeispiel ein Verbindungskanal 17, welcher sich im oberen Bereich der Behandlungszone unter der Belüftungseinheit 2 befindet und nach unten geschlossen ist, sodass das Überführen eines Teils 6a von Behandlungsfluid von einer Behandlungszone zur prozesstechnisch nachfolgenden Behandlungszone 1a über diesen Verbindungskanal 17 entkoppelt vom Durchtrittsbereich 7 der Folie erfolgt. Dadurch ist es möglich, einen gewünschten Teil von Behandlungsfluid einer prozesstechnisch nachfolgenden Behandlungszone 1a zuzuführen, ohne dass die aus behandlungstechnischen Gründen zu vermeidende Längsströmung in Bewegungsrichtung der Folie durch eine jeweilige Behandlungszone auftritt bzw. durch die Weiterleitung eines Teils an Behandlungsfluid zur prozesstechnisch nachfolgenden Behandlungszone verstärkt würde.

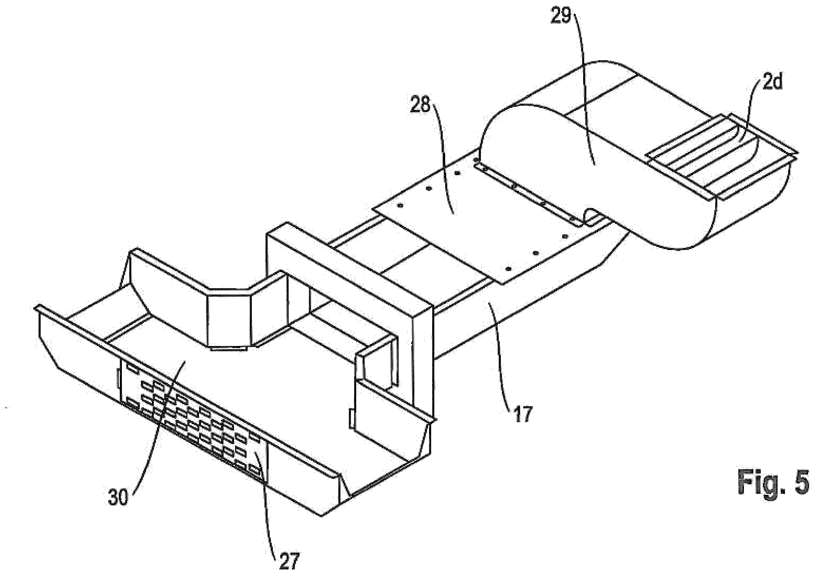

Figur 5 zeigt einen Verbindungskanal 17 gemäß einem ersten Ausführungsbeispiel, welcher als separates Bauelement bereits in Fig. 4 dargestellt ist und mit seinem T-Stück nach unten geschlossen oberhalb des Durchtrittsbereichs 7 für die Folie durch die Behandlungszone 1 angeordnet ist. Der Verbindungskanal 17 ist im Wesentlichen im Querschnitt rechteckig und führt von dem sich in der Behandlungszone 1 befindlichen T-Stück über einen in Durchlaufrichtung der Folie verlaufenden rechteckigen Kanal mit einer in Form eines Mittelstücks 28 vorgesehenen Abdeckung in die prozesstechnisch nachfolgende Behandlungszone 1a. Von dem Ende des rechteckigen Kanals ist ein S-Bogen 29 nach oben in die nicht dargestellte Belüftungseinheit geführt. Der Vorteil dieses Verbindungskanals 17 besteht unter anderem darin, dass er bautechnisch sich zwischen der eigentlichen Behandlungszone, d. h. oberhalb des Durchtrittsbereichs 7 der Folie durch diese Behandlungszone und im unteren Bereich der Belüftungseinheit geführt ist. Dadurch sind für die Weiterleitung eines Teils 6a des Behandlungsfluids 6 von einer Behandlungszone 1 zur prozesstechnisch benachbarten Behandlungszone 1a keine externen Rohrleitungen erforderlich.

Der S-Bogen 29 führt das Behandlungsfluid von einer mittigen Anordnung des Verbindungskanals 17 zu einer seitlichen Anordnung in die Belüftungseinheit, in welchem Bereich sich der Wärmetauscher befindet. Vorzugsweise sind im S-Bogen 29 zusätzlich Leitbleche vorgesehen, um die Strömung optimal auf den Wärmetauscher in der Belüftungseinheit zu leiten. Das an der Stirnseite des T-Stücks 30 des Verbindungskanals 17 befindliche Lochblech 27 sichert eine zusätzliche Luftzufuhr aus dem Ofen, d. h. aus der Behandlungszone. Dieses Lochblech ist vorzugsweise bezüglich der Größe der Öffnungen verstellbar, sodass die Menge an über das Lochblech dem Verbindungskanal 17 zugeführtem Behandlungsfluid einstellbar gesteuert werden kann.

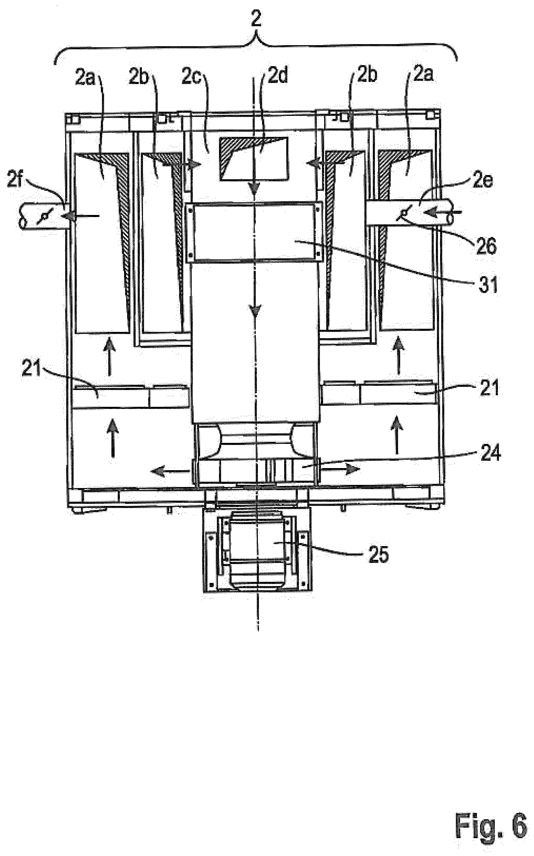

In Figur 6 ist in prinzipieller Anordnung die Führung des Behandlungsfluids durch die Belüftungseinheit 2 dargestellt. Von einem durch einen Antriebsmotor 25 angetriebenen Lüfter 24 wie z. B. ein Radiallüfter wird das Behandlungsfluid 6 in den äußeren Bereich der Belüftungseinheit 2 geführt. Dort wird es durch einen optional vorgesehenen Filter 21 geführt und gelangt dann durch einen ersten Strömungsbereich 2a nach unten in die eigentliche Behandlungszone. Dort trifft das Behandlungsfluid auf die Folie (nicht gezeigt). Durch einen zweiten Strömungsbereich 2b wird das Behandlungsfluid mittels des Lüfters 24 wieder in die Belüftungseinheit 2 zurückgesaugt. Nun gelangt das Behandlungsfluid in einen dritten Strömungsbereich 2c vor dem Wärmetauscher 31. Die in Fig. 6 dargestellte Belüftungseinheit 2 ist die, welche zu der Behandlungszone 1a gehört. Der Teilstrom 6a des Behandlungsfluids aus der prozesstechnisch vorgelagerten Behandlungszone 1 (s. Fig. 3) gelangt durch eine Öffnung 2d in der Belüftungseinheit oberhalb des (nicht gezeigten) zur Behandlungszone gehörenden Verbindungskanals 17 ebenfalls in den dritten Strömungsbereich 2c. Der Teilstrom 6a des Behandlungsfluids kann aber auch zusätzlich oder anstelle dessen über den rohrförmigen Verbindungskanal 2e über den Strömungsbereich 2b in den dritten Strömungsbereich 2c geführt werden. Dazu ist in dem rohrförmigen Verbindungskanal 2e ein Stellschieber 26 angeordnet, über welchen die Menge an Teilstrom 6a einstellbar ist. Der Teilstrom 6a gelangt somit entweder über den Verbindungskanal 17, in welchem ebenfalls ein (nicht dargestellter) weiterer Stellschieber vorgesehen sein kann, oder über den rohrförmigen Verbindungskanal 2e oder über beide in den dritten Strömungsbereich 2c. Das nun vermischte Behandlungsfluid aus den Behandlungszonen 1 und 1a wird also gemeinsam im Wärmetauscher 31 temperiert und gelangt durch den Lüfter 24 wieder in den ersten Strömungsbereich 2a, womit der Kreislauf geschlossen ist. Bevor das Behandlungsfluid wieder nach unten in die zugehörige eigentliche Behandlungszone strömt, wird ggf. ein Teil durch eine Öffnung 2f zur nächsten Behandlungszone bzw. Belüftungseinheit geleitet. Es ist aber auch möglich, dass dieser Teil schon aus der Behandlungszone abgeleitet wurde. Durch dieses System bleibt die Luftbilanz erhalten, was letztlich zur Minimierung der für den Prozess schädlichen Längsströmung des Behandlungsfluids und damit zu einer sehr guten gleichmäßigen Temperaturverteilung über der Folie führt.

Vor allen Dingen bei schmaleren Anlagen kann es gegebenenfalls problematisch sein, die gemäß der ersten Ausführung beschriebene Variante eines rechteckigen Verbindungskanals 17 (siehe Figur 5) platztechnisch unterzubringen. In einem solchen Fall ist gemäß der zweiten Ausführung der Verbindungskanal nur als rohrförmiger Verbindungskanal 2e, 2f zwischen benachbarten Belüftungseinheiten ausgebildet.

Figur 6 stellt aber ein Ausführungsbeispiel dar, bei welchem sowohl der Verbindungskanal 17 als auch die rohrförmigen Verbindungskanäle 2e, 2f vorgesehen sind. Über diese rohrförmigen Verbindungskanäle 2e, 2f bzw. den Verbindungskanal 17 wird ein Teil 6a des Behandlungsfluids 6 dem Wärmetauscher 31 der jeweiligen Behandlungszone 1a zugeführt. Dadurch ist es möglich, den Teil 6a des Behandlungsfluids aus einer vorherigen Behandlungszone entsprechend dem in der prozesstechnisch nachfolgenden Behandlungszone 1a zur thermischen Behandlung der Folie zu realisierenden Temperaturprofil aufzuheizen und gezielt ein vorgegebenes Temperaturprofil bzw. einen Temperaturanstieg bzw. Temperaturverlauf in dieser Behandlungszone zu realisieren.

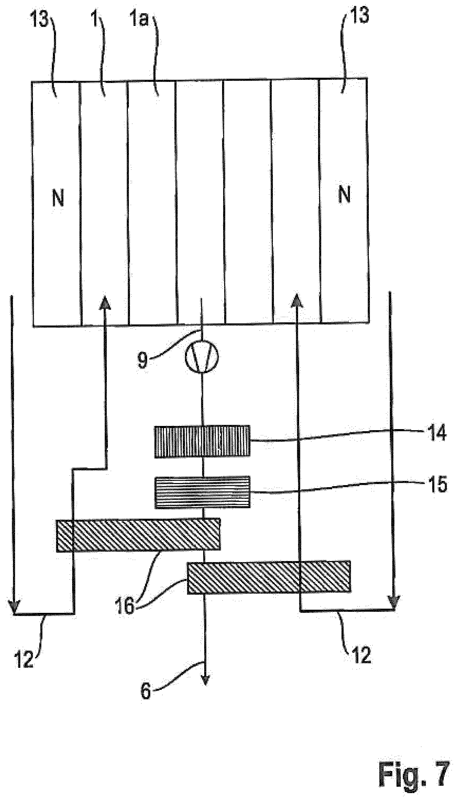

Und schließlich zeigt Figur 7 eine prinzipielle Darstellung einer Schaltungsanordnung zur weiteren Verbesserung der Effizienz der Folienreckanlage mit der neuen Führung von Behandlungsfluid. Dazu ist im Bereich der Behandlungszonen, in welchen prozesstechnisch die höchsten Temperaturen auftreten, eine Entnahmestelle 9 für das Behandlungsfluid vorgesehen, über welche mittels eines nicht bezeichneten weiteren Gebläses das an Verunreinigungen angereicherte Behandlungsfluid durch einen Katalysator 14 geführt ist. Prinzipiell ist es möglich, das gesamte Behandlungsfluid 6 durch den Katalysator zu führen. Es ist jedoch auch möglich, nur einen Teil des Behandlungsfluids durch den Katalysator zu führen. Im letzteren Fall kann der Katalysator kleiner dimensioniert werden. Vorzugsweise ist für die gesamte Anlage, d. h. für den gesamten Ofen nur ein einziger Katalysator vorgesehen. Selbstverständlich ist es auch möglich, weitere Katalysatoren vorzusehen, sodass an mehreren Stellen Entnahmen aus Behandlungszonen mit prozesstechnisch hohen Temperaturen vorgenommen werden können. Eine Entnahme macht überall dort Sinn, wo prozesstechnische Temperaturen vorhanden sind, bei denen das Behandlungsfluid einen nennenswerten Anteil an Verunreinigungen enthält, welche in einem oder den Katalysatoren 14 verbrannt werden können.

Gemäß dem in Figur 7 dargestellten Anlagenschema ist dem Katalysator 14 noch ein Filter 15 nachgeordnet. Nach dem Filter sind zur weiteren Erhöhung der Energieeffizienz der erfindungsgemäßen Folienreckanlage eine Wärmerückgewinnungseinrichtung 16 in Form von Wärmetauschern vorgesehen, welche die relativ hohe Energie des entnommenen Behandlungsfluids aus den Behandlungszonen hoher oder höchster Prozesstemperatur an Behandlungsfluid abgeben, welches über Überbrückungseinrichtungen 12 entweder im nicht dargestellten Gleichstrombereich oder im nicht dargestellten Gegenstrombereich übertragen werden kann, sodass das Behandlungsfluid in den Behandlungszonen, in welche das Behandlungsfluid mittels der Überbrückungsvorrichtung 12 über die jeweiligen Neutralzonen 13 hinweg zugeführt wird, für das dort vorhandene entsprechende Temperaturprofil geeignet ist.

Die Anordnung von Katalysatoren macht überall dort Sinn, wo die Prozesstemperaturen über 200°C liegen. Beispielsweise sind bei Polypropylenfolien, welche vornehmlich für Verpackungen eingesetzt werden, die in einem derartigen Ofen einer Folienreckanlage auftretenden maximalen Temperaturen im Bereich von 165°C nicht hoch genug, dass sich der Einsatz von Katalysatoren lohnen würde. Der Einsatz von Katalysatoren ist also abhängig von der Art des herzustellenden Folienproduktes. Katalysatoren und/oder Filter in Verbindung mit Wärmerückgewinnungseinrichtungen sind jedoch empfehlenswert bei Folien aus Polyester für Verpackungen, Polyester als Dickfilm oder als optischer Film sowie auch bei Polyamidfolien.

Bei der vorliegenden neuen Behandlungsfluidführung mit sehr wenigen und vorzugsweise nur einer einzigen Entnahmestelle mit einer deutlich reduzierten, durch die Gesamtanlage zu schickenden Behandlungsfluidmenge ist es beispielsweise auch möglich, das Behandlungsfluid von beispielsweise 165°C bei Polyproylenanlagen auf über 200°C zu erwärmen und so einer effektiven katalytischen Behandlung zugänglich zu machen. Dadurch kann die Abgasbelastung deutlich reduziert werden, bzw. ein Teil des Behandlungsfluids kann wiederverwendet werden. Dadurch ist der zusätzliche Energiebedarf für das Aufheizen auf über 200°C kompensierbar. Auch kann die dann deutlich sauberere Luft wesentlich betriebssicherer einem Wärmetauscher zugeführt werden. Dieser Wärmetauscher wird dann deutlich seltener verschmutzt, wodurch der Reinigungsaufwand für eine solche Anlage auch sinkt. Des Weiteren besteht ein Vorteil darin, dass bei guter Dimensionierung die Katalysatoren durchaus bis zu 95% der Verunreinigungen beseitigen können.

Energiebilanzrechnungen zum Vergleich von herkömmlichen Anlagen mit erfindungsgemäßen Anlagen und zwar sowohl hinsichtlich Anlagen ohne wie auch Anlagen mit Wärmerückgewinnung offenbaren, dass erhebliche Energieeinsparungen mit der erfindungsgemäßen Folienreckanlage mit der neuartigen Führung von Behandlungsfluid erreicht werden können. So sind bei einem neuartigen System im Vergleich mit einem bekannten System mit Wärmerückgewinnung 25 bis ca. 30% an Energie einsparbar. Ein Vergleich des neuartigen Systems mit einem bekannten System ohne Wärmerückgewinnung führt schließlich zu Energieeinsparungen im Bereich von 35 bis 40%. Wenn demgegenüber ein neuartiges System mit Wärmerückgewinnung mit einem bekannten System ohne Wärmerückgewinnung verglichen wird, so ergeben sich Energieeinsparungen, welche durchaus im Bereich von 50% liegen können.

Ein weiterer bautechnischer Vorteil ergibt sich vor allen Dingen daraus, dass erhebliche Mengen an außen an dem Bereich des Ofens der Folienreckanlage anzubringenden Rohrleitungen eingespart werden kann.

### Bezuqszeichenliste

- 1: Behandlungszone
- 1a: nachfolgende Behandlungszone
- 2: Belüftungseinheit
- 2a: erster Strömungsbereich
- 2b: zweiter Strömungsbereich
- 2c: dritter Strömungsbereich
- 2d: Öffnung
- 2e: rohrförmiger Verbindungskanal
- 2f: rohrförmiger Verbindungskanal
- 3: Ofen
- 4: Folie
- 5: Folieneintrittsbereich
- 6: Behandlungsfluid
- 6a: Teil des Behandlungsfluids
- 7: Durchtrittsbereich der Folie
- 8: Folienaustrittsbereich
- 9: Entnahmestelle
- 10: Gleichstrombereich
- 11: Gegenstrombereich
- 12: Überbrückungseinrichtung
- 13: Neutralzone
- 14: Katalysator
- 15: Filter
- 16: Wärmerückgewinnungseinrichtung
- 17: Verbindungskanal
- 18: Zufuhr
- 19: Entnahme
- 21: Filter in Belüftungseinheit
- 22: Rohrleitung
- 23: Gebläse/Lüfter
- 24: Lüfter
- 25: Antriebsmotor
- 26: Stellschieber
- 27: Lochblech
- 28: Mittelstück/Abdeckung
- 29: S-Bogen
- 30: T-Stück
- 31: Wärmetauscher

## Patentansprüche

1. Folienreckanlage mit aus mehreren jeweils eine Belüftungseinheit (2) aufweisenden Behandlungszonen (1) bestehendem Ofen (3), welchem eine Folie (4) über einen Folieneintrittsbereich (5) zuführbar ist, wobei in den Behandlungszonen (1) die Folie (4) zonenweise thermisch behandelbar ist und Behandlungsfluid (6) die Folie (4) in den Behandlungszonen (1) an ihrer Oberseite und ihrer Unterseite überströmt,
**dadurch gekennzeichnet, dass**
a) das Behandlungsfluid (6) in der jeweiligen Behandlungszone (1) durch ihre jeweilige Belüftungseinheit (2) zur thermischen Behandlung der Folie (4) umwälzbar ist und ein Teil (6a) des Behandlungsfluids (6) von der jeweiligen Behandlungszone (1) zur prozesstechnisch nachfolgenden Behandlungszone (1a) geführt ist,
b) der von der Behandlungszone (1) in die nachfolgende Behandlungszone (1a) geführte Teil (6a) des Behandlungsfluids (6) entkoppelt vom Durchtrittsbereich (7) der Folie (4) in den Behandlungszonen (1) geführt ist und
c) die jeweilige Behandlungszone (1) mit einem Wärmetauscher ausgerüstet ist, mittels welchem der ihr zugeführte Teil (6a) des Behandlungsfluids (6) an die in dieser Behandlungszone prozesstechnisch zur thermischen Behandlung der Folie (4) erforderliche Temperatur anpassbar ist.

2. Folienreckanlage nach Anspruch 1, **dadurch gekennzeichnet, dass** dem Ofen (3) im Folieneintrittsbereich (5) und in einem Folienaustrittsbereich (8) Behandlungsfluid (6) derart zuführbar ist, dass das Behandlungsfluid (6) hinsichtlich seiner Strömungsrichtung und der Folienbewegungsrichtung vom Folieneintrittsbereich (5) aus im Gleichstrom und vom Folienaustrittsbereich (8) aus im Gegenstrom strömt.

3. Folienreckanlage nach Anspruch 1 oder 2, **dadurch gekennzeichnet, dass** das Behandlungsfluid (6) insbesondere Luft ist und dessen zur jeweiligen Behandlungszone (1a) geführter Teil (6a) sowie der Wärmetauscher so regelbar sind, dass in der jeweiligen Behandlungszone (1a) ein definiertes Temperaturprofil an der thermisch behandelten Folie einstellbar ist.

4. Folienreckanlage nach einem der Ansprüche 1 bis 3, **dadurch gekennzeichnet, dass** prozesstechnisch nach dem Folieneintrittsbereich (5) eine Entnahmestelle (9) zur Entnahme von Behandlungsfluid (6) vorgesehen ist.

5. Folienreckanlage nach Anspruch 4, **dadurch gekennzeichnet, dass** die Entnahme von Behandlungsfluid (6) über die Entnahmestelle (9) an zumindest einer Behandlungszone (1) oder die Entnahme über je eine Entnahmestelle an zwei benachbart zueinander angeordneten Behandlungszonen (1, 1a) mit Behandlungstemperaturen erfolgt, welche höher sind als die in den restlichen Behandlungszonen.

6. Folienreckanlage nach Anspruch 5, **dadurch gekennzeichnet, dass** das entnommene Behandlungsfluid durch einen Katalysator (14) geführt ist, welcher extern von den Behandlungszonen (1) angeordnet ist und das entnommene Behandlungsfluid katalytisch behandelt.

7. Folienreckanlage nach Anspruch 6, **dadurch gekennzeichnet, dass** dem Katalysator (14) in Durchströmrichtung nachgeordnet ein Filter (15) zum Filtern des katalytisch behandelten Behandlungsfluids zugeordnet ist.

8. Folienreckanlage nach Anspruch 6 oder 7, **dadurch gekennzeichnet, dass** in Durchströmrichtung nach dem Katalysator (14) eine Wärmerückgewinnungseinrichtung (16) angeordnet ist, deren rückgewonnene Wärmeenergie dem Ofen (3) wieder zuführbar ist und/oder von welcher das Behandlungsfluid (6) ausgewählten Behandlungszonen (1) wieder zuführbar ist.

9. Folienreckanlage nach Anspruch 4, in seinem Rückbezug auf Anspruch 2 oder 3, oder 5, **dadurch gekennzeichnet, dass** die Entnahme von Behandlungsfluid (6) aus den Behandlungszonen erfolgt, welche am Ende des Gleichstrombereiches (10) und am Ende des Gegenstrombereiches (11) angeordnet sind.

10. Folienreckanlage nach einem der Ansprüche 1 bis 9, **dadurch gekennzeichnet, dass** eine Überbrückungseinrichtung (12) zur Überleitung von Behandlungsfluid (6) über eine behandlungsfreie Neutralzone (13) zur prozesstechnisch nachfolgenden Behandlungszone angeordnet ist.

11. Folienreckanlage nach Anspruch 10, **dadurch gekennzeichnet, dass** die Überbrückungseinrichtungen (12) bezüglich des Behandlungsfluid-Volumenstroms regelbar sind.

12. Folienreckanlage nach einem der Ansprüche 1 bis 11, **dadurch gekennzeichnet, dass** der Ofen (3) Behandlungszonen (1) in Form von Eintrittszone, Reckzonen, Fixierzonen und Austrittszone, insbesondere auch Aufheizzonen, Kühlzonen und Neutralzonen (13), aufweist.

13. Folienreckanlage nach einem der Ansprüche 1 bis 12, **dadurch gekennzeichnet, dass** der Teil (6a) des Behandlungsfluids (6) über einen Verbindungskanal (2e, 2f; 17) von Behandlungszone (1) zu Behandlungszone (1a) geführt ist, welcher strömungstechnisch vom Durchtrittsbereich (7) der Folie (4) durch die Behandlungszonen (1) getrennt ist.

14. Folienreckanlage nach Anspruch 13, **dadurch gekennzeichnet, dass** der Verbindungskanal (2e, 2f; 17) zwischen zwei Belüftungseinheiten (2) oder zwei Behandlungszonen (1) oder einer Belüftungseinheit (2) und einer Behandlungszone (1) angeordnet ist.

15. Folienreckanlage nach Anspruch 13 oder 14, **dadurch gekennzeichnet, dass** die Strömung des Behandlungsfluids (6) durch den Verbindungskanal (2e, 2f; 17) regelbar und/oder steuerbar ist.

## Claims

1. Film stretching plant with a furnace (3) consisting of several treatment zones (1) respectively comprising a ventilation unit (2), to which furnace a film (4) is suppliable via a film inlet region (5), wherein the film (4) is thermally treatable zone-wise in the treatment zones (1), and treatment fluid (6) flows over the film (4) on its upper surface and its lower surface in the treatment zones (1), **characterized in that**
a) the treatment fluid (6) is circulatable in the respective treatment zone (1) by its respective ventilation unit (2) for the thermal treatment of the film (4), and a portion (6a) of the treatment fluid (6) is conveyed from the respective treatment zone (1) to the process-technically following treatment zone (1a),
b) the portion (6a) of the treatment fluid (6) that is conveyed from the treatment zone (1) into the following treatment zone (1a) is conveyed decoupled from the passage region (7) of the film (4) in the treatment zones (1), and
c) the respective treatment zone (1) is equipped with a heat exchanger, by means of which the portion (6a) of the treatment fluid (6) conveyed to it is adaptable to the temperature that is process-technically required in this treatment zone for the thermal treatment of the film (4).

2. Film stretching plant according to claim 1, **characterized in that** treatment fluid (6) is conveyable to the furnace (3) in the film inlet region (5) and in a film outlet region (8) in such a manner so that the treatment fluid (6), with regard to its flow direction and the film motion direction, flows from the film inlet region (5) in uniflow current or co-current flow and flows from the film outlet region (8) in counterflow.

3. Film stretching plant according to claim 1 or 2, **characterized in that** the treatment fluid (6) is particularly air, and the portion (6a) thereof that is conveyed to the respective treatment zone (1a) as well as the heat exchanger are regulatable in such a manner so that in the respective treatment zone (1a) a defined temperature profile on the thermally treated film is adjustable.

4. Film stretching plant according to one of the claims 1 to 3, **characterized in that** a sampling place (9) for the sampling of treatment fluid (6) is provided process-technically after the film inlet region (5).

5. Film stretching plant according to claim 4, **characterized in that** the sampling of treatment fluid (6) occurs through the sampling place (9) at at least one treatment zone (1), or the sampling occurs through one sampling place each at two treatment zones (1, 1a) arranged adjacent to one another with treatment temperatures that are higher than those in the remaining treatment zones.

6. Film stretching plant according to claim 5, **characterized in that** the sampled treatment fluid is conveyed through a catalyzer (14) which is arranged externally from the treatment zones (1) and catalytically treats the removed treatment fluid.

7. Film stretching plant according to claim 6, **characterized in that** a filter (15) for filtering the catalytically treated treatment fluid is allocated to the catalyzer (14) in the throughflow direction downstream the catalyzer.

8. Film stretching plant according to claim 6 or 7, **characterized in that** a heat recovery device (16) is arranged downstream the catalyzer (14) in the throughflow direction, wherein the recovered heat energy of the heat recovery device is conveyable again to the furnace (3) and/or from which heat recovery device the treatment fluid (6) is conveyable again to selected treatment zones (1).

9. Film stretching plant according to claim 4, in its dependence from claim 2 or 3, or 5, **characterized in that** the sampling of treatment fluid (6) occurs out of the treatment zones that are arranged at the end of the co-current flow region (10) and at the end of the counterflow region (11).

10. Film stretching plant according to one of the claims 1 to 9, **characterized in that** a bridging device (12) is arranged for transferring treatment fluid (6) over a treatment-free neutral zone (13) to the process-technically following treatment zone.

11. Film stretching plant according to claim 10, **characterized in that** the bridging devices (12) are regulatable with respect to the treatment fluid volume flow.

12. Film stretching plant according to one of the claims 1 to 11, **characterized in that** the furnace (3) comprises treatment zones (1) in the form of inlet zone, stretching zones, fixing zones and outlet zone, particularly also heating zones, cooling zones and neutral zones (13).

13. Film stretching plant according to one of the claims 1 to 12, **characterized in that** the portion (6a) of the treatment fluid (6) is conveyed through a connecting channel (2e, 2f; 17) from treatment zone (1) to treatment zone (1a), which is separated flow-technically from the passage region (7) of the film (4) through the treatment zones (1).

14. Film stretching plant according to claim 13, **characterized in that** the connecting channel (2e, 2f; 17) is arranged between two ventilation units (2) or two treatment zones (1) or one ventilation unit (2) and one treatment zone (1).

15. Film stretching plant according to claim 13 or 14, **characterized in that** the flow of the treatment fluid (6) through the connecting channel (2e, 2f; 17) is regulatable and/or controllable.

## Revendications

1. Installation d'étirage de film avec un four (3) constitué de plusieurs zones de traitement (1) comprenant respectivement une unité de ventilation (2), auquel four un film (4) peut être amené via une région d'entrée de film (5), le film (4) pouvant être traité thermiquement par zone dans les zones de traitement (1), et un fluide de traitement (6) s'écoulant sur le film (4) sur sa surface supérieure et sa surface inférieure dans les zones de traitement (1), **caractérisée en ce que**
a) le fluide de traitement (6) peut circuler dans la zone de traitement respective (1) par son unité de ventilation respective (2) pour le traitement thermique du film (4), et une partie (6a) du fluide de traitement (6) est transportée de la zone de traitement respective (1) vers la zone de traitement suivante du point de vue de la technique des processus (1a),
b) la partie (6a) du fluide de traitement (6) qui est transportée de la zone de traitement (1) dans la zone de traitement (1a) suivante est transportée découplée de la région de passage (7) du film (4) dans les zones de traitement (1), et
c) la zone de traitement respective (1) est équipée d'un échangeur de chaleur au moyen duquel la partie (6a) du fluide de traitement (6) qui lui est amenée peut être adaptée à la température nécessaire du point de vue de la technique des processus dans cette zone de traitement pour le traitement thermique du film (4).

2. Installation d'étirage de film selon la revendication 1, **caractérisée en ce que** le fluide de traitement (6) peut être transporté vers le four (3) dans la région d'entrée de film (5) et dans une région de sortie de film (8) de telle manière que le fluide de traitement (6), en ce qui concerne sa direction d'écoulement et la direction de mouvement du film, s'écoule de la région d'entrée de film (5) en courant uniforme ou co-courant et s'écoule de la région de sortie du film (8) en contre-courant.

3. Installation d'étirage de film selon la revendication 1 ou 2, **caractérisée en ce que** le fluide de traitement (6) est en particulier de l'air, et la partie (6a) de celui-ci qui est transportée vers la zone de traitement respective (1a) ainsi que l'échangeur de chaleur sont réglables de telle manière que dans la zone de traitement respective (1a) un profil de température défini sur le film traité thermiquement est ajustable.

4. Installation d'étirage de film selon l'une des revendications 1 à 3, **caractérisée en ce qu'**un poste de prélèvement (9) pour le prélèvement de fluide de traitement (6) est prévu du point de vue de la technique des processus après la région d'entrée de film (5).

5. Installation d'étirage de film selon la revendication 4, **caractérisée en ce que** l'échantillonnage du fluide de traitement (6) s'effectue à travers le point d'échantillonnage (9) sur au moins une zone de traitement (1), ou l'échantillonnage s'effectue à travers un point d'échantillonnage sur deux zones de traitement (1, 1a) disposées l'une à côté de l'autre avec des températures de traitement qui sont supérieures à celles dans les autres zones de traitement.

6. Installation d'étirage de film selon la revendication 5, **caractérisée en ce que** le fluide de traitement échantillonné est transporté à travers un catalyseur (14) qui est disposé à l'extérieur des zones de traitement (1) et traite catalytiquement le fluide de traitement enlevé.

7. Installation d'étirage de film selon la revendication 6, **caractérisée en ce qu'**un filtre (15) pour filtrer le fluide de traitement traité catalytiquement est affecté au catalyseur (14) dans la direction d'écoulement en aval du catalyseur.

8. Installation d'étirage de film selon la revendication 6 ou 7, **caractérisée en ce qu'**un dispositif de récupération de chaleur (16) est disposé en aval du catalyseur (14) dans la direction d'écoulement, l'énergie thermique récupérée du dispositif de récupération de chaleur pouvant à nouveau être transportée au four (3) et/ou à partir duquel le fluide de traitement (6) peut à nouveau être transporté vers des zones de traitement sélectionnées (1).

9. Installation d'étirage de film selon la revendication 4, en dépendance à la revendication 2, 3 ou 5, **caractérisée en ce que** l'échantillonnage du fluide de traitement (6) s'effectue à partir des zones de traitement qui sont disposées à la fin de la région d'écoulement co-courant (10) et à la fin de la région contre-courant (11).

10. Installation d'étirage de film selon l'une des revendications 1 à 9, **caractérisée en ce qu'**un dispositif de pontage (12) est disposé pour transférer le fluide de traitement (6) sur une zone neutre (13) non traitée vers la zone de traitement suivante du point de vue de la technique des processus.

11. Installation d'étirage de film selon la revendication 10, **caractérisée en ce que** les dispositifs de pontage (12) sont réglables en ce qui concerne le débit volumique du fluide de traitement.

12. Installation d'étirage de film selon l'une des revendications 1 à 11, **caractérisée en ce que** le four (3) comporte des zones de traitement (1) sous forme de zone d'entrée, de zones d'étirage, de zones de fixation et de zone de sortie, en particulier également des zones de chauffage, des zones de refroidissement et des zones neutres (13).

13. Installation d'étirage de film selon l'une des revendications 1 à 12, **caractérisée en ce que** la partie (6a) du fluide de traitement (6) est transportée à travers un canal de raccordement (2e, 2f ; 17) de la zone de traitement (1) à la zone de traitement (1a) qui est séparée techniquement de la région de passage (7) du film (4) par les zones de traitement (1).

14. Installation d'étirage de film selon la revendication 13, **caractérisée en ce que** le canal de raccordement (2e, 2f; 17) est disposé entre deux unités de ventilation (2) ou deux zones de traitement (1) ou une unité de ventilation (2) et une zone de traitement (1).

15. Installation d'étirage de film selon la revendication 13 ou 14, **caractérisée en ce que** l'écoulement du fluide de traitement (6) à travers le canal de raccordement (2e, 2f ; 17) est réglable et/ou commandable.
